(19) Europäisches Patentamt
European Patent Office
Office européen des brevets

(11) EP 4 606 860 A1

# (12) EUROPEAN PATENT APPLICATION
published in accordance with Art. 153(4) EPC

(43) Date of publication:
**27.08.2025 Bulletin 2025/35**

(21) Application number: **24849397.5**

(22) Date of filing: **04.07.2024**

(51) International Patent Classification (IPC):
***C08L 67/04*** (2006.01) ***C08L 33/06*** (2006.01)
***C08L 63/00*** (2006.01) ***C08J 5/18*** (2006.01)

(52) Cooperative Patent Classification (CPC):
**C08J 5/18; C08L 33/06; C08L 63/00; C08L 67/04**

(86) International application number:
**PCT/KR2024/009466**

(87) International publication number:
**WO 2025/028827 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023 KR 20230098841**
**03.07.2024 KR 20240087702**

(71) Applicant: **LG CHEM, LTD.**
**Seoul 07336 (KR)**

(72) Inventors:
- **JEONG, Woongchan**
  **Daejeon 34122 (KR)**
- **LEE, Donghyun**
  **Daejeon 34122 (KR)**
- **KIM, Seungha**
  **Daejeon 34122 (KR)**
- **MOON, Jungmi**
  **Daejeon 34122 (KR)**
- **HONG, Ja Min**
  **Daejeon 34122 (KR)**
- **LEE, Seung Heon**
  **Daejeon 34122 (KR)**
- **LEE, Jungyong**
  **Daejeon 34122 (KR)**
- **PARK, Junki**
  **Daejeon 34122 (KR)**
- **HEO, Yongjoon**
  **Daejeon 34122 (KR)**
- **HAN, Kyeong Hwan**
  **Daejeon 34122 (KR)**

(74) Representative: **Hoffmann Eitle**
**Patent- und Rechtsanwälte PartmbB**
**Arabellastraße 30**
**81925 München (DE)**

## (54) BLEND RESIN COMPOSITION AND BLEND FILM COMPRISING SAME

(57) The present disclosure provides a blend resin composition comprising: a continuous phase containing polylactic acid, a dispersed phase containing poly(3-hydroxypropionate), and two or more different compatibilizers, and satisfying a predetermined complex viscosity ratio and storage modulus ratio, and a blend film including the same.

【FIG. 1】

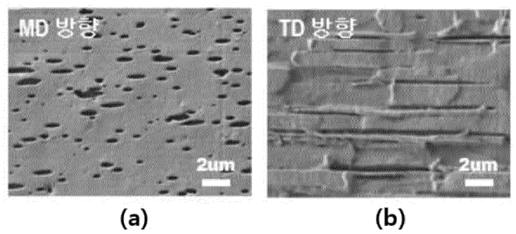


MD 방향: MD direction

TD 방향: TD direction

EP 4 606 860 A1

## Description

## FIELD OF THE INVENTION

CROSS-REFERENCE TO RELATED APPLICATION(S)

This application claims priority to and the benefit of Korean Patent Application No. 10-2023-0098841, filed on July 28, 2023, and Korean Patent Application No. 10-2024-0087702, filed on July 3, 2024, with the Korean Intellectual Property Office, the disclosures of which are incorporated herein by reference in their entirety.

The present disclosure relates to a blend resin composition and a blend film comprising the same.

## BACKGROUND OF THE INVENTION

Typical general-purpose plastic films that are now widely used include polyvinyl chloride(pvc), polyethylene(pe), or polypropylene(pp) derived from petroleum. Recently, research has been conducted to apply a polyester resin, which has high biodegradability of the resin itself, to film products, but its use in packaging films is limited due to its lack of mechanical strength, flexibility, heat resistance, impact resistance, and transparency.

Poly(3-hydroxypropionate) (hereinafter, referred to as P3HP) is a flexible and biodegradable polyester material, but has poor mechanical strength and flexibility, which makes it difficult to use as a single polymer. Further, polylactic acid(PLA) is known to be biodegradable and at the same time have excellent mechanical properties such as tensile strength and elastic modulus, but it has poor elongation characteristics and shows the property of being easy broken (brittleness), which limits its use as a general-purpose resin. Therefore, research is being conducted to blend polylactic acid and poly(3-hydroxypropionate) to complement the two materials, but there are still limitations to the physical properties.

For example, however, when polylactic acid and poly(3-hydroxypropionate) are simply blended and applied to a film product, the compatibility between the two materials is low, and the transparency of the film is significantly reduced, which makes it difficult to use in packaging applications where transparency is required. In addition, since the interfacial adhesion between the two materials is low, the mechanical properties such as tensile strength and impact resistance are reduced, which makes it difficult to replace the conventional general-purpose plastic film.

## SUMMARY OF THE INVENTION

## TECHNICAL PROBLEM

It is an object of the present disclosure to provide a biodegradable blend resin composition that is excellent in mechanical properties such as tensile strength and elongation, optical properties such as transmittance, and moisture and air blocking properties, and a blend film comprising the same.

## TECHNICAL SOLUTION

According to an embodiment of the present disclosure, there is provided a blend resin composition comprising: a continuous phase containing polylactic acid, a dispersed phase containing poly(3-hydroxypropionate), and two or more different compatibilizers, wherein a complex viscosity ratio according to the following Equation 1 is 0.40 or less, and wherein a storage modulus ratio according to the following Equation 2 is 0.30 or less.

Complex viscosity ratio = Complex viscosity of dispersed phase / Complex viscosity of continuous phase [Equation 1]

Storage modulus ratio = Storage modulus of dispersed phase / Storage modulus of continuous phase [Equation 2]

in Equations 1 and 2, the storage modulus and the complex viscosity are values measured at a temperature of 180°C.

According to another embodiment of the present disclosure, there is provided a blend resin film comprising the blend resin composition.

Now, a blend resin composition and a blend film comprising the same according to specific embodiments of the present disclosure will be described in more detail.

Unless particularly mentioned herein, the term "including" or "comprising" refers to including some element (or component) without any limitation, and should not be construed as excluding addition of other elements (or components).

Further, unless otherwise stated herein, the weight average molecular weight of the polymer and copolymer can be measured using a gel permeation chromatography(GPC). Specifically, the polymer and copolymer are dissolved in chloroform to a concentration of 2 mg/ml, then 20 $\mu\ell$ of the solution is injected into GPC, and GPC analysis is carried out at 40°C. At this time, chloroform is used as the mobile phase for GPC, the flow rate is 1.0 mL/min, and the column used is two Agilent Mixed-B units connected in series. RI Detector is used as a detector. The values of Mw can be obtained using a calibration curve formed using a polystyrene standard sample. Nine kinds of the polystyrene standard samples are used with the weight average molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol.

As used herein, the term "substituted or unsubstituted" means being unsubstituted or substituted with one or more substituent groups selected from the group consisting of deuterium; a halogen group; a nitrile group; a nitro group; a hydroxy group; a carbonyl group; an ester group; an imide group; an amino group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkylamine group; an aralkylamine group; a heteroarylamine group; an arylamine group; an arylphosphine group; and a heterocyclic group containing at least one of N, O and S atoms, or being unsubstituted or substituted with a substituent group to which two or more substituent groups of the aboveexemplified substituent groups are linked. For example, "a substituent group to which two or more substituents are linked" may be a biphenylyl group. Namely, a biphenyl group may be an aryl group, or it may be interpreted as a substituent group in which two phenyl groups are linked.

Conventionally, there was a problem that when polylactic acid and poly(3-hydroxypropionate) are simply blended and applied to a film product, the compatibility between the two materials is low, the transparency of the film is significantly reduced, which makes it difficult to use for packaging applications that require transparency, and the interfacial adhesion between the two materials is low, and thus the mechanical properties such as tensile properties and impact resistance are reduced.

Therefore, the present inventors have found that when a blend resin composition comprise a continuous phase containing polylactic acid, a dispersed phase containing poly(3-hydroxypropionate), and two or more different compatibilizers, a complex viscosity ratio according to the following Equation 1 is 0.40 or less, and a storage modulus ratio according to the following Equation 2 is 0.30 or less, it is excellent in mechanical properties such as tensile strength and elongation, optical properties such as transmittance, and moisture and air blocking properties, and completed the present disclosure.

Further, since the polylactic acid and poly(3-hydroxypropionate) exhibit environmentally friendly and biodegradable properties while containing a large amount of bio-based raw materials, a film containing the same can also contain a large amount of bio-based raw materials while maintaining environmentally and biodegradable properties.

According to an embodiment of the present disclosure, there is provided a blend resin composition comprising: a continuous phase containing polylactic acid, a dispersed phase containing poly(3-hydroxypropionate), and two or more different compatibilizers, wherein a complex viscosity ratio according to Equation 1 is 0.40 or less, and wherein a storage modulus ratio according to Equation 2 is 0.30 or less.

Specifically, the complex viscosity ratio according to Equation 1 of the blend resin composition may be 0.40 or less, 0.01 or more and 0.30 or less, 0.02 or more and 0.20 or less, or 0.02 or more and 0.15 or less. Further, the storage modulus ratio according to Equation 2 of the blend resin composition may be 0.300 or less, 0.001 or more and 0.200 or less, 0.002 or more and 0.100 or less, 0.003 or more and 0.090 or less, or 0.004 or more and 0.080 or less. When the complex viscosity ratio and/or the storage modulus ratio of the blend resin composition is too high, the elongation or the transmittance may be reduced.

The blend resin composition uses a combination of two or more compatibilizers having different affinities for polylactic acid and poly(3-hydroxypropionate), or controls the molecular weight of poly(3-hydroxypropionate), and the linear or branched structure of poly(3-hydroxypropionate), whereby the complex viscosity ratio and the storage modulus ratio can satisfy the above-mentioned ranges. In addition, since the complex viscosity ratio and the storage modulus ratio satisfy the above-mentioned range, the morphology of the dispersed phase in the blend resin composition can have a laminar structure, and thus, the mechanical properties such as tensile strength and elongation, the optical properties such as transmittance, and the moisture and air blocking properties can exhibit excellently.

Specifically, FIG. 3 is a schematic diagram showing the morphology deformation process of the dispersed phase in the process of forming a film using a blend resin composition. Referring to this, the flow properties of the composition in a die region and a discharge port region are important factors in determining the morphology and quality of the dispersed phase in the film. In the die region, deformation and break-up of the dispersed phase occur due to strong shear stress, and in the discharge port region, stress relaxation phenomena that depend on the viscoelastic properties of the blend resin composition may occur. For example, when a blend resin composition with very high viscoelastic properties is used as a raw material, it is difficult for the dispersed phase to deform and break-up inside the extruder, or the dispersed phase, which has deformed a laminar shape in an extruder, can quickly recover elasticity at the discharge port. Therefore, it may be

difficult to achieve a laminar dispersed phase structure with a high aspect ratio in the finally produced film.

However, in the blend resin composition according to one embodiment, the complex viscosity ratio and the storage modulus ratio satisfy the above-mentioned ranges, and thus, the deformation and break-up of the dispersed phase are easily performed in the extruder, and the deformation is maintained at the discharge port, so that a laminar dispersed phase structure having a high aspect ratio can be included. **The** blend resin composition and the blend film containing such a laminar dispersed phase structure with a high aspect ratio exhibit excellent mechanical properties such as tensile strength and elongation, optical properties such as transmittance, and moisture and air blocking properties. Specifically, the dispersed phase can have an average aspect ratio of 6.0 or more, 7.0 or more and 20.0 or less, 8.0 or more and 18.0 or less, or 9.0 or more and 16.0 or less. If the dispersed phase has an excessively small average aspect ratio, i.e., does not exhibit a laminar dispersed phase structure, the blend resin composition and blend film including the dispersed phase may have reduced elongation or reduced transmittance.

In the complex viscosity ratio, the complex viscosity of the dispersed phase can be derived by measuring the complex viscosity of poly(3-hydroxypropionate) included in the dispersed phase of the blend resin composition, and the complex viscosity of the continuous phase can be derived by measuring the complex viscosity of polylactic acid contained in the continuous phase of the blend resin composition.

Similarly, in the storage modulus ratio, the storage modulus of the dispersed phase can be derived by measuring the storage modulus of poly(3-hydroxypropionate) contained in the dispersed phase of the blend resin composition, and the storage modulus of the continuous phase can be derived by measuring the storage modulus of polylactic acid contained in the continuous phase of the blend resin composition.

Such complex viscosity and storage modulus can be measured using a viscoelasticity measuring device under the conditions of an angular frequency of 0.3 rad/s to 500 rad/s, a dynamic strain frequency sweep mode, a measurement temperature of 180°C, and a strain of 0.5%.

The complex viscosity of the dispersed phase may be 0.5 Pa·s or more and 500 Pa·s or less, 1.0 Pa·s or more and 450 Pa·s or less, 1.5 Pa·s or more and 400 Pa·s or less, or 2.0 Pa·s or more and 350 Pa·s or less, based on 500 rad/s. The complex viscosity of the continuous phase may be 500 Pa·s or more and 100,000 Pa·s or less, 550 Pa·s or more and 90,000 Pa·s or less, 600 Pa·s or more and 85,000 Pa·s or less, or 650 Pa·s or more and 80,000 Pa·s or less, based on 500 rad/s.

The storage modulus of the dispersed phase may be 20 Pa·s or more and 50,000 Pa·s or less, 30 Pa·s or more and 45,000 Pa·s or less, 40 Pa·s or more and 40,000 Pa·s or less, or 50 Pa·s or more and 35,000 Pa·s or less, based on 500 rad/s.

The storage modulus of the continuous phase may be 50,000 Pa·s or more and 5,000,000 Pa·s or less, 45,000 Pa·s or more and 4,500,000 Pa·s or less, 40,000 Pa·s or more and 4,000,000 Pa·s or less, or 35,000 Pa·s or more and 3,500,000 Pa·s or less, based on 500 rad/s.

The complex viscosity of the blend resin composition may be 550 Pa·s or more and 900 Pa·s or less, 560 Pa·s or more and 850 Pa·s or less, 570 Pa·s or more and 830 Pa·s or less, or 580 Pa·s or more and 800 Pa·s or less based on 500 rad/s.

The storage modulus of the blend resin composition may be 10,000 Pa·s or more and 2,000,000 Pa·s or less, 20,000 Pa·s or more and 1,500,000 Pa·s or less, or 30,000 Pa·s or more and 1,000,000 Pa·s or less based on 500 rad/s.

The blend resin composition according to one embodiment may include two or more different compatibilizers. The compatibilizer may react with a hydroxyl group(-OH) and a carboxyl group(-COOH), which are end groups of polylactic acid and poly(3-hydroxypropionate), to perform a coupling reaction, thereby improving the compatibility of the blend resin composition.

Further, the two or more different compatibilizers may have different affinities for, for example, polylactic acid and poly(3-hydroxypropionate). For example, two or more compatibilizers may comprise a first compatibilizer in which an interfacial tension difference with the polylactic acid at 180°C is 0.3 mN/m or more and 2.0 mN/m or less, and a second compatibilizer in which an interfacial tension difference with the polylactic acid at 180°C is more than 2.0 mN/m and 8.0 mN/m or less. As the blend resin composition contains a first and a second compatibilizer having different interfacial tension differences at 180°C, the complex viscosity ratio and the storage modulus ratio satisfy the above-mentioned range, and the average aspect ratio of the dispersed phase satisfies the above-mentioned range, so that the mechanical properties such as tensile strength and elongation, the optical properties such as transmittance, and the moisture and air blocking properties can be exhibited excellently.

The first compatibilizer may have an interfacial tension difference with the polylactic acid at 180°C of 0.3 mN/m or more and 2.0 mN/m or less, 0.5 mN/m or more and 1.8 mN/m or less, 0.7 mN/m or more and 1.6 mN/m or less, or 0.8 mN/m or more and 1.4 mN/m or less. The second compatibilizer may have an interfacial tension difference with the polylactic acid at 180°C of more than 2.0 mN/m and 8.0 mN/m or less, 2.5 mN/m or more and 7.5 mN/m or less, 3.0 mN/m or more and 7.0 mN/m or less, 3.5 mN/m or more and 6.5 mN/m or less, or 4.0 mN/m or more and 5.5 mN/m or less.

The first compatibilizer may have a higher affinity with polylactic acid than with poly(3-hydroxypropionate). Further, the second compatibilizer may have a higher affinity with poly(3-hydroxypropionate) than with polylactic acid.

Further, the first compatibilizer may have a higher affinity with polylactic acid than the second compatibilizer, and the second compatibilizer may have a higher affinity with poly(3-hydroxypropionate) than the first compatibilizer.

Since the first compatibilizer has high affinity with polylactic acid, the first compatibilizer can easily move to the continuous phase containing polylactic acid while the composition is being kneaded inside the extruder, so that the relative concentration of the first compatibilizer in the continuous phase can be significantly increased. Therefore, when only the first compatibilizer is used, the first compatibilizer may be used for the chain extension reaction between "polylactic acid and polylactic acid" or between "poly(3-hydroxypropionate) and poly(3-hydroxypropionate), rather than being used for the coupling reaction between polylactic acid and poly(3-hydroxypropionate) at the interface between the dispersed phase and the continuous phase. In this case, the compatibility and mechanical properties of the blend resin composition and the film can be reduced. However, since the blend resin composition according to one embodiment includes both the first compatibilizer and the second compatibilizer, the compatibility, mechanical properties, and optical properties of the blend resin composition and the film can all be exhibited excellently.

The first compatibilizer may be an acrylate copolymer having three or more epoxy groups. For example, the acrylate copolymer may have 3 or more and 30 or less, 4 or more and 25 or less, or 5 or more and 20 or less epoxy groups, and may have an epoxy equivalent of 200 g/mol or more and 600 g/mol or less, 250 g/mol or more and 550 g/mol or less, 300 g/mol or more and 500 g/mol or less, or 350 g/mol or more and 450 g/mol or less.

Further, the acrylate copolymer having three or more epoxy groups may have a weight average molecular weight of 1,000 or more and 15,000 or less, 2,000 or more and 13,000 or less, 3,000 or more and 11,000 or less, or 5,000 or more and 10,000 or less.

Further, the acrylate copolymer having three or more epoxy groups may be a copolymer obtained by polymerizing two or more monomers selected from the group consisting of styrene, glycidyl (meth)acrylate, butyl(meth)acrylate, ethyl(meth)acrylate, methyl(meth)acrylate, (meth)acrylic acid, itaconic acid, maleic anhydride, acrylamide, and 2-ethylhexyl (meth)acrylate.

Further, the first compatibilizer may include a repeating unit represented by the following Chemical Formula 1.

[Chemical Formula 1]

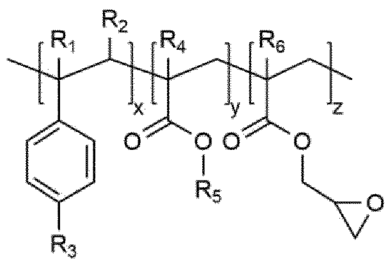

wherein in Chemical Formula 1,

$R_1$ to $R_6$ may be each independently hydrogen, deuterium, hydroxy, nitro, amino, a substituted or unsubstituted alkyl having 2 to 60 carbon atoms, a substituted or unsubstituted alkoxy having 2 to 60 carbon atoms, a substituted or unsubstituted alkenyl having 2 to 60 carbon atoms, a substituted or unsubstituted cycloalkyl having 4 to 60 carbon atoms, a substituted or unsubstituted aryl having 6 to 60 carbon atoms, a or substituted or unsubstituted heteroaryl having 2 to 60 carbon atoms containing at least one of O, N, Si and S.

For example, $R_1$ to $R_3$ may be each independently hydrogen or deuterium.

Further, $R_4$ and $R_6$ may be each independently hydrogen, deuterium, methyl, ethyl or propyl.

Further, $R_5$ may be an alkyl having 2 to 60 carbon atoms.

x, y, and z may be each independently an integer of 1 to 20.

The second compatibilizer contained in the blend resin composition according to one embodiment may be a difunctional glycidyl ether-based compound, a trifunctional glycidyl ether-based compound, or a mixture thereof.

The difunctional glycidyl ether-based compound may be a compound containing a glycidyl group at both ends, and a number average molecular weight thereof may be 100 to 15,000, 200 to 10,000, 300 to 9,000, or 500 to 8,000.

The difunctional glycidyl ether-based compound may be a compound represented by the following Chemical Formula 2.

[Chemical Formula 2]

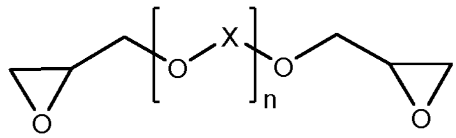

wherein in Chemical Formula 2,

X is a substituted or unsubstituted alkylene having 2 to 60 carbon atoms, or a substituted or unsubstituted arylene having 6 to 60 carbon atoms,
and n may be an integer of 1 to 20.

The bifunctional glycidyl ether-based compound may include, but is not limited thereto, for example, at least one selected from the group consisting of poly(ethylene glycol) diglycidyl ether (PEG-DE), poly(propylene glycol) diglycidyl ether (PPG-DE), ethylene glycol diglycidyl ether (EG-DE), neopentyl glycol diglycidyl ether (NG-DE), glycerol diglycidyl ether (Gly-DE) and resorcinol diglycidyl ether (RSN-DE).

The trifunctional glycidyl ether-based compound may be a compound containing three glycidyl groups, and a number average molecular weight thereof may be 100 to 15,000, 150 to 10,000, 200 to 9,000, or 300 to 8,000.

The trifunctional glycidyl ether-based compound may be a compound represented by the following Chemical Formula 3.

[Chemical Formula 3]

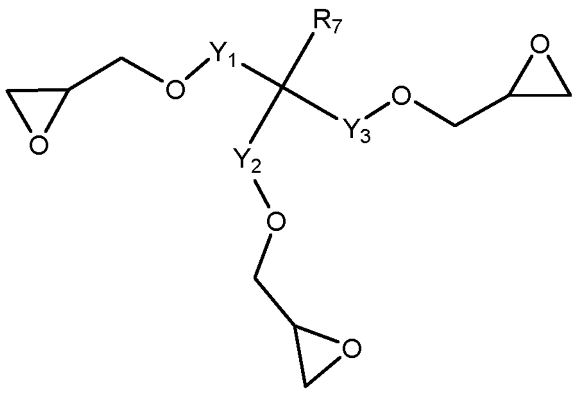

wherein in Chemical Formula 3,

$Y_1$ to $Y_3$ are each independently a substituted or unsubstituted alkylene having to 60 carbon atoms, or a substituted or unsubstituted arylene having 6 to 60 carbon atoms, and
$R_7$ may be hydrogen, deuterium, methyl, ethyl or propyl.

**The** trifunctional glycidyl ether-based compound may include, but is not limited thereto, for example, trimethylolpropane triglycidyl ether, glycerol triglycidyl ether, triphenylolmethane triglycidyl ether, and the like.

**The** two or more different compatibilizers may be contained in an amount of 0.1 wt.% or more and 10.0 wt.% or less, 0.2 wt.% or more and 9.0 wt.% or less, 0.3 wt.% or more and 8.0 wt.% or less, or 0.4 wt.% or more and 7.0 wt.% or less, based on 100 wt.% of the blend resin composition. **If** the content of the compatibilizer is too small, the compatibility improvement effect cannot be exhibited, and if the content of the compatibilizer is too large, the material of the composition or film becomes too hard, which may make it difficult to use for applications such as packaging films.

Further, the weight ratio between the first compatibilizer and the second compatibilizer may be 10:90 to 60:40, 20:80 to 55:45, or 30:70 to 50:50. **If** the first compatibilizer and the second compatibilizer do not satisfy the above weight ratio, the compatibility improvement effect cannot be exhibited.

The blend resin composition according to one embodiment comprises a continuous phase containing polylactic acid and a dispersed phase containing poly(3-hydroxypropionate).

The above polylactic acid is a polymer having lactic acid or lactide as a monomer, exhibits biodegradability and

excellent physical properties such as high rigidity, and may be at least one selected from the group consisting of poly L-lactic acid, poly D-lactic acid, and poly L, D-lactic acid. The polylactic acid may have a weight average molecular weight of 100,000 or more and 400,000 or less, 130,000 or more and 350,000 or less, 150,000 or more and 330,000 or less, 180,000 or more and 300,000 or less, or 200,000 or more and 250,000 or less. If the weight average molecular weight of the polylactic acid is too low, the mechanical strength of the blend resin composition containing the polylactic acid and the film produced therefrom may be reduced, and if the weight average molecular weight of the polylactic acid is too high, extrusion processing may be difficult.

The poly(3-hydroxypropionate) may be a polymer produced by microorganism culture, or a polymer prepared by the polymerization of 3-hydroxypropionate produced by microorganism culture.

The poly(3-hydroxypropionate) may have a weight average molecular weight of 10,000 or more and 350,000 or less, 13,000 or more and 300,000 or less, 15,000 or more and 250,000 or less, 18,000 or more and 230,000 or less, or 20,000 or more and 200,000 or less. If the weight average molecular weight of the poly(3-hydroxypropionate) is too low, the flexibility improvement effect of the polylactic acid may be reduced, and if the weight average molecular weight of the poly(3-hydroxypropionate) is too high, the miscibility of the blend resin composition containing the same and the film produced therefrom may be reduced.

Further, the poly(3-hydroxypropionate) may have a polydispersity index(PDI) of 1.0 or more and 13.0 or less, 1.5 or more and 11.0 or less, 2.0 or more and 9.0 or less, 2.5 or more and 8.0 or less, or 3.0 or more and 7.0 or less.

The weight ratio between the polylactic acid and poly(3-hydroxypropionate) contained in the blend resin composition according to one embodiment may be 99:1 to 60:40, 98:2 to 70:30, 97:3 to 80:20, 96:4 to 85:25, 95:5 to 90:10. When poly(3-hydroxypropionate) is used in an excessively large amount compared to the polylactic acid, the miscibility of the blend resin composition and the film produced therefrom may be reduced, and when poly(3-hydroxypropionate) is used in an excessively small amount compared to the polylactic acid, the flexibility improvement effect of the polylactic acid may be reduced.

The blend resin composition may further include an antioxidant. The antioxidant may be contained in an amount of 0.001 to 1 wt.% based on 100 wt.% of the blend resin composition. Preferably, the antioxidant may be contained in an amount of 0.01 to 0.1 wt.%.

The antioxidant may be at least one selected from the group consisting of a hindered phenol-based antioxidant, an amine-based antioxidant, a thio-based antioxidant, and a phosphine-based antioxidant, but is not limited thereto.

Specific examples of antioxidants may include a phosphoric acid-based heat stabilizer, such as phosphoric acid, trimethyl phosphate or triethyl phosphate; a hindered phenol-based primary antioxidant, such as 2,6-di-t-butyl-p-cresol, octadecyl-3-(4-hydroxy-3,5-di-t-butylphenyl)propionate, tetrakis[methylene-3-(3,5-di-t-butyl-4-hydroxyphenyl)propionate]methane, 1,3,5-trimethyl-2,4,6-tris(3,5-di-t-butyl-4-hydroxybenzyl)benzene, 3,5-di-t-butyl-4-hydroxybenzylphosphite diethyl ester, 2,2-thiobis(4-methyl-6-t-butylphenol), 2,6-g,t-butylphenol, 4,4'-butylidene-bis(3-methyl-6-t-butylphenol), 4,4'-thiobis(3-methyl-6-t-butylphenol) or bis[3,3-bis-(4'-hydroxy-3'-tert-butylphenyl)butanoicacid]glycol ester; an amine-based secondary antioxidant, such as phenyl-α-naphthylamine, phenyl-β-naphthylamine, N,N'-diphenyl-p-phenylenediamine or N,N'-di-β-naphthyl-p-phenylenediamine; a thio-based secondary antioxidant, such as dilauryl disulfide, dilauryl thiopropionate, distearyl thiopropionate, mercaptobenzothiazole, or tetramethylthiuram disulfide tetrakis[methylene-3-(laurylthio)propionate]methane; or a phosphite-based secondary antioxidant, such as triphenyl phosphite, tris(nonylphenyl)phosphite, triisodecyl phosphite, bis(2,4-ditbutylphenyl)pentaerythritol diphosphite. or (1,1'-biphenyl)-4,4'-diylbisphosphonous acid tetrakis[2,4-bis(1,1-dimethylethyl)phenyl]ester.

The blend resin composition may be prepared by performing the compounding in a certain extrusion process using an extruder. Specifically, the polylactic acid and poly(3-hydroxypropionate) can be mixed in a main hopper in the form of pellets and powder of similar size and then charged. Further, two or more compatibilizers can also be charged into the main hopper. The extrusion compounding step of the blend resin can be performed at temperatures of 150 to 200°C, 160 to 190°C, or 170 to 185°C for 30 minutes to 1 hour. In addition, if the extrusion conditions are below the above range, the viscosity of the resin increases and the flowability decreases, which causes a problem that the extrusion torque increases, and if the extrusion conditions exceed the above range, there are problems such as discoloration of the polymer and a decrease in physical properties.

The extruder can be a water-cooled twin-screw extruder. In addition, The twin-screw extruder preferably has extrusion conditions of an extrusion screw speed of 100 to 200 rpm and a pelletizer speed of 100 to 500 rpm. The extruder may be a corotating twin-screw extruder, and the screw speed and pelletizer speed in the extruder may be adjusted within the above range to facilitate the extrusion compounding process.

The discharge temperature of the final discharge portion of the screw of the water-cooled twin-screw extruder is 170 to 220°C, 180 to 210°C, 190 to 200°C, the discharge temperature of the remaining screw portion is 150 to 200°C, 160 to 190°C, 170 to 185°C, and the temperature of the main hopper is preferably 120 to 170°C, 130 to 160 °C, 140 to 150°C. The final discharge portion of the screw may mean a portion corresponding to 1/20 of the total length of the entire screw of the water-cooled twin-screw extruder. In the water-cooled twin-screw extruder, if the temperature of the final discharge portion of the screw is too low, there is a problem that the resin is not discharged smoothly due to lack of flowability, and if the

temperature is too high, there is a problem that the physical properties of the polymer are deteriorated and discolored.

According to another embodiment of the disclosure, a blend film comprising the blend resin composition is provided.

The blend film may have a tensile strength measured according to ASTM D882 of 40 MPa or more, 45 MPa or more, or 50 MPa to 200 MPa.

Further, the blend film may have an elongation measured according to ASTM D882 of 100% or more, 200% or more, 250% or more, 300% or more, and 500% or less.

Further, the blend film may have a transmittance of 80% or more, 82% or more, 84% or more, 85% or more, and 100% or less.

The thickness of the blend film may be 10 to 300 $\mu$m, and more specifically, it may be 10 $\mu$m or more, 20 $\mu$m or more, 30 $\mu$m or more, or 300 $\mu$m or less, 200 $\mu$m or less, or 150 $\mu$m or less. Since the thickness of the film is within the above range, the elasticity is strong, the handleability is excellent, and the roll winding state or unwinding property is improved. If the thickness of the film is too thin, the tensile strength, tear strength, and elongation are deteriorated, and the film may be punctured or torn during use, and if the thickness of the film is too thick, the unit price competitiveness may be reduced. The blend film can be used as medical individual packaging, food packaging, garbage bags, agricultural mulching films, disposable gloves, or bags for various industrial products.

The method for producing the blend film is not particularly limited, but the blend film can be obtained by using the blend resin composition according to a conventional film production method such as a known inflation method, a tubular method, and a T-die casting method. For example, the composition can be pelletized, and the pellets can be dried at 60 to 10 0°C for 6 hours or more to control the moisture content to 1,200 ppm or less, 500 ppm or less, or 200 ppm or less.

Subsequently, the pelletized composite can be applied to a release film, and then placed in a thermocompression machine and pressure can be applied to produce the film. At this time, the temperature may be 130 to 250°C, 150 to 220°C, or 160 to 200°C, and the pressure may be 5 MPa to 20 MPa, 8 MPa to 17 MPa, or 10 MPa to 15 MPa.

## ADVANTAGEOUS EFFECTS

According to the present disclosure, a biodegradable blend resin composition excellent in mechanical properties such as tensile strength and elongation, optical properties such as transmittance, and moisture and air blocking properties while maintaining environmental affinity and biodegradability, and a blend film comprising the same can be provided.

## BRIEF DESCRIPTION OF THE DRAWINGS

FIG. 1 is a cross-sectional SEM image of the blend film of Example 1.
FIG. 2 is a schematic diagram showing the dispersed phase.
FIG. 3 is a schematic diagram showing the morphology deformation process of the dispersed phase in the process of forming a film using the blend resin composition.

## DETAILED DESCRIPTION OF THE EMBODIMENTS

Hereinafter, embodiments of the present disclosure will be explained in detail with reference to examples. However, the following examples are for illustrative purposes only, and the detailed description of the present disclosure is not limited by these examples.

### Preparation Example 1: Preparation of poly(3-hydroxypropionic acid) A

3-Hydroxypropionic acid (3HP) dissolved in water was placed in an RBF and moisture was dried at 90°C and 100 torr for 2 hours. 300 g of dried 3-hydroxypropionic acid(3HP) was placed in the reactor, and reacted by using 230 mg of p-TSA (0.2 mol% based on 1 mol of 3HP) as a catalyst at 90°C for 12 hours to prepare a poly(3-hydroxypropionic acid) A (weight average molecular weight: 25,000 g/mol).

### Preparation Example 2: Preparation of poly(3-hydroxypropionic acid) B

3-Hydroxypropionic acid (3HP) dissolved in water was placed in an RBF and moisture was dried at 90°C and 100 torr for 2 hours. 300 g of dried 3-hydroxypropionic acid(3HP) was placed in the reactor, and reacted by using 460 mg of p-TSA (0.4 mol% based on 1 mol of 3HP) as a catalyst at 90°C for 24 hours to prepare a poly(3-hydroxypropionic acid) B (weight average molecular weight: 150,000 g/mol).

**Preparation Example 3: Preparation of poly(3-hydroxypropionic acid) C**

3-Hydroxypropionic acid (3HP) dissolved in water was placed in an RBF and moisture was dried at 90°C and 100 torr for 2 hours. 300 g of dried 3-hydroxypropionic acid(3HP) was placed in the reactor, and reacted by using 690 mg of p-TSA (0.6 mol% based on 1 mol of 3HP) as a catalyst at 90°C for 48 hours to prepare a poly(3-hydroxypropionic acid) C (weight average molecular weight: 400,000 g/mol).

**Example 1**

90 g of polylactic acid (product name: PLA-2003D, manufacturer: NatureWorks, weight average molecular weight: 200,000), 10 g of poly(3-hydroxypropionate) A prepared in Preparation Example, 0.5 g of a first compatibilizer (product name: Joncryl ADR-4400, manufacturer: BASF), 1.0 g of a second compatibilizer (poly(ethylene glycol)diglycidyl ether, product name: Poly(ethylene glycol)diglycidyl ether (Mn 500, manufacturer: Sigma-Aldrich)), 0.25 g of Irganox 1010 and 0.25 g of Irgafos 168 as antioxidants were mixed, and a blend resin composition was prepared using a corotating twin screw extruder. At this time, the reaction was carried out at an extruder barrel temperature of 185°C and an extrusion speed of 400 rpm for 5 minutes to prepare a blend resin composition, which was pelletized.

After extrusion, the pelletized sample was used in an extrusion molding machine to produce a blend film. During film formation, the barrel temperature was 185°C, the die temperature was 160°C, the roll speed was 200 rpm, and the thickness of the blend film was 0.2 mm.

**Example 2**

A blend resin composition and a blend film were produced in the same manner as in Example 1, except that 10 g of poly(3-hydroxypropionate) B prepared in Preparation Example 2 was used instead of 10 g of poly(3-hydroxypropionate) A prepared in Preparation Example 1.

**Example 3**

A blend resin composition and a blend film were produced in the same manner as in Example 1, except that 95 g of polylactic acid (product name: PLA-2003D, manufacturer: NatureWorks, weight average molecular weight: 200,000) was used instead of 90 g of polylactic acid (product name: PLA-2003D, manufacturer: NatureWorks, weight average molecular weight: 200,000); 5 g of poly(3-hydroxypropionate) A prepared in Preparation Example 1 was used instead of 10 g of poly(3-hydroxypropionate) A prepared in Preparation Example 1; and 0.5 g of the second compatibilizer (poly(ethylene glycol)diglycidyl ether, product name: Poly(ethylene glycol)diglycidyl ether (Mn 500, manufacturer: Sigma-Aldrich)) was used instead of 1.0 g of the second compatibilizer (poly(ethylene glycol)diglycidyl ether, product name: Poly(ethylene glycol) diglycidyl ether (Mn 500, manufacturer: Sigma-Aldrich)).

**Example 4**

A blend resin composition and a blend film were produced in the same manner as in Example 1, except that 0.5 g of the first compatibilizer (product name: Joncryl ADR-4468, manufacturer: BASF) was used instead of 0.5 g of the first compatibilizer (product name: Joncryl ADR-4400, manufacturer: BASF).

**Example 5**

A blend resin composition and a blend film were produced in the same manner as in Example 1, except that 1.0 g of trimethylolpropane triglycidyl ether (Mn 302, manufacturer: Sigma-Aldrich) as a second compatibilizer was used instead of 1.0 g of a second compatibilizer (poly(ethylene glycol)diglycidyl ether, product name: Poly(ethylene glycol) diglycidyl ether (Mn 500, manufacturer: Sigma-Aldrich)).

**Comparative Example 1**

A blend resin composition and a blend film were produced in the same manner as in Example 1, except that 10 g of poly(3-hydroxypropionate) C prepared in Preparation Example 3 was used instead of 10 g of poly(3-hydroxypropionate) A prepared in Preparation Example 1.

### Comparative Example 2

A blend resin composition and a blend film were produced in the same manner as in Example 2, except that the second compatibilizer was not used.

[Table 1]

| (unit: g) | PLA | P3HP | First compatibilizer | Second compatibilizer |
|---|---|---|---|---|
| Example 1 | 90 | 10 | 0.5 | 1.0 |
| Example 2 | 90 | 10 | 0.5 | 1.0 |
| Example 3 | 95 | 5 | 0.5 | 0.5 |
| Example 4 | 90 | 10 | 0.5 | 1.0 |
| Example 5 | 90 | 10 | 0.5 | 1.0 |
| Comparative Example 1 | 90 | 10 | 0.5 | 0.5 |
| Comparative Example 2 | 90 | 10 | 0.5 | 0 |

## Evaluation

### 1. Measurement of complex viscosity ratio and storage modulus ratio

The complex viscosity ratio and the storage modulus ratio of the blend resin compositions of Examples and Comparative Examples were measured using a viscoelasticity measuring device (DHR-3; Discovery Hybrid Rheometer, TA Instruments).

Also, the conditions for measuring the complex viscosity and storage modulus of the dispersed phase resin, continuous phase resin, and blend resin composition are as follows. Specifically, the sample loading was performed with a gap of 1.0 mm using parallel plates with a diameter of 25.0 mm, and the analysis was performed at an angular frequency of 0.3 rad/s to 500 rad/s. In the dynamic strain-free sweep mode, the measurement temperature was 180°C, the strain was 0.5%, the analysis time was 20 minutes, and the preheating time after sample preparation was controlled to 1.5 minutes.

Complex viscosity ratio = Complex viscosity of dispersed phase / Complex viscosity of continuous phase [Equation 1]

Storage modulus ratio = Storage modulus of dispersed phase / Storage modulus of continuous phase [Equation 2]

### 2. Measurement of average aspect ratio of dispersed phase

The average aspect ratio of the dispersed phase was measured for the blend resin compositions of Examples and Comparative Examples using a scanning electron microscope (SEM, JSM 7610F plus, JEOL). The average aspect ratio was calculated by excluding the maximum and minimum aspect ratios of the 10 dispersed phases and averaging the remaining values.

In addition, in order to facilitate observation of the dispersed phase, a rupture surface of the sample was created using a cryomicrotome, and then the sample was immersed in a mixed solution of water and methanol for 60 minutes to selectively remove the poly(3-hydroxypropionate) dispersed phase, and the aspect ratio of the dispersed phase was measured.

FIG. 2 is a schematic diagram of the dispersed phase, wherein the aspect ratio of the dispersed phase was calculated by substituting the length(A) of the dispersed phase, the major axis length(B) of the cross section, and the minor axis length(C) of the cross section into the following Equations 3 and 4.

Aspect ratio of dispersed phase = Length(A) of dispersed phase /Diameter(Q) of dispersed phase cross section [Equation 3]

[Equation 4]

$$\text{Diameter}(Q)\text{ of dispersed phase cross section} = 2\sqrt{\text{Major axis length}(B)\text{ of cross section } X \text{ Minor axis length}(C)\text{ of cross section}}$$

Further, FIG. 1 is a cross-sectional SEM image of the blend film of Example 1, and it can be seen that the dispersed phase appears in a laminar structure.

**3. Measurement of tensile strength and elongation**

The tensile strength and elongation of the blend films of Examples and Comparative Examples were measured using a UTM (Universal Testing Machine) according to ASTM D882. The length and width of the sample were controlled according to ASTM D882, and the sample was stabilized at room temperature for at least 48 hours, the elongation was measured at a stretching rate of 40%/min at room temperature. The results are shown in Table 2 below.

**4. Measurement of transmittance**

The transmittance of the blend films of Examples and Comparative Examples was measured in the wavelength range of 380 to 780 nm using a spectrophotometer having an integrating sphere ["V7100" manufactured by Nihon Bunko Co., Ltd.], and the results are shown in Table 2 below.

[Table 2]

| | Complex viscosity ratio | Storage modulus ratio | Complex viscosity of blend resin (500 rad/s) | Average aspect ratio | Tensile strength (Mpa) | Elongation (%) | Transmittance (%) |
|---|---|---|---|---|---|---|---|
| Example 1 | 0.02 | 0.005 | 608 | 16 | 50 | 383 | 90 |
| Example 2 | 0.14 | 0.080 | 686 | 9 | 53 | 304 | 85 |
| Example 3 | 0.02 | 0.005 | 781 | 12 | 51 | 348 | 93 |
| Example 4 | 0.02 | 0.005 | 687 | 13 | 54 | 235 | 87 |
| Example 5 | 0.02 | 0.005 | 534 | 12 | 47 | 271 | 89 |
| Comparative Example 1 | 0.46 | 0.360 | 522 | 3 | 56 | 96 | 77 |
| Comparative Example 2 | 0.14 | 0.080 | 196 | 5 | 49 | 32 | 83 |

According to Table 1, it was confirmed that in Examples 1 to 5, the complex viscosity ratio was 0.14 or less and the storage modulus ratio is 0.080 or less, and so the average aspect ratio of the dispersed phase is 9 or more, and both the tensile properties and optical properties are excellent. On the other hand, it was confirmed that in Comparative Example 1, the complex viscosity ratio and the storage modulus ratio are 0.46 and 0.36, respectively, so that the viscoelasticity of the dispersed phase is too high, which makes it difficult for the dispersed phase to deform and break-up in the extruder, or the elastic recovery of the deformation at a discharge portion is fast, so the average aspect ratio of the dispersed phase is low as 3, and thus, both the elongation and the transmittance were low. In addition, it was confirmed that in Comparative Example 2, since the second compatibilizer is not used, the coupling reaction efficiency of the compatibilizer at the interface between the dispersed phase and the continuous phase is lowered, which results in a reduction of elongation.

**Claims**

1. A blend resin composition comprising: a continuous phase containing polylactic acid, a dispersed phase containing poly(3-hydroxypropionate), and two or more different compatibilizers,

wherein a complex viscosity ratio according to the following Equation 1 is 0.40 or less, and
wherein a storage modulus ratio according to the following Equation 2 is 0.30 or less.

Complex viscosity ratio = Complex viscosity of dispersed phase / Complex viscosity of continuous phase [Equation 1]

Storage modulus ratio = Storage modulus of dispersed phase / Storage modulus of continuous phase [Equation 2]

in the Equations 1 and 2,
the storage modulus and the complex viscosity are values measured at a temperature of 180°C.

**2.** The blend resin composition according to claim 1,
wherein the dispersed phase has an average aspect ratio of 6.0 or more.

**3.** The blend resin composition according to claim 1,

wherein the two or more compatibilizers comprise,
a first compatibilizer in which an interfacial tension difference with the polylactic acid at 180°C is 0.3 mN/m or more and 2.0 mN/m or less, and
a second compatibilizer in which the interfacial tension difference with the polylactic acid at 180°C is more than 2.0 mN/m and 8.0 mN/m or less.

**4.** The blend resin composition according to claim 3,
wherein the first compatibilizer is an acrylate-based copolymer having three or more epoxy groups.

**5.** The blend resin composition according to claim 3,
wherein the second compatibilizer is a bifunctional glycidyl ether-based compound, a trifunctional glycidyl ether-based compound, or a mixture thereof.

**6.** The blend resin composition according to claim 1,
wherein the two or more different compatibilizers are included in an amount of 0.1 wt.% or more and 10 wt.% or less based on 100 wt.% of the blend resin composition.

**7.** The blend resin composition according to claim 3,
wherein a weight ratio between the first compatibilizer and the second compatibilizer is 10:90 to 60:40.

**8.** The blend resin composition according to claim 1,
wherein a weight ratio between the polylactic acid and poly(3-hydroxypropionate) is 99:1 to 60:40.

**9.** The blend resin composition according to claim 1,
wherein the polylactic acid has a weight average molecular weight of 100,000 or more and 400,000 or less.

**10.** The blend resin composition according to claim 1,
wherein the poly(3-hydroxypropionate) has a weight average molecular weight of 10,000 or more and 350,000 or less.

**11.** A blend resin film comprising the blend resin composition according to claim 1.

【FIG. 1】

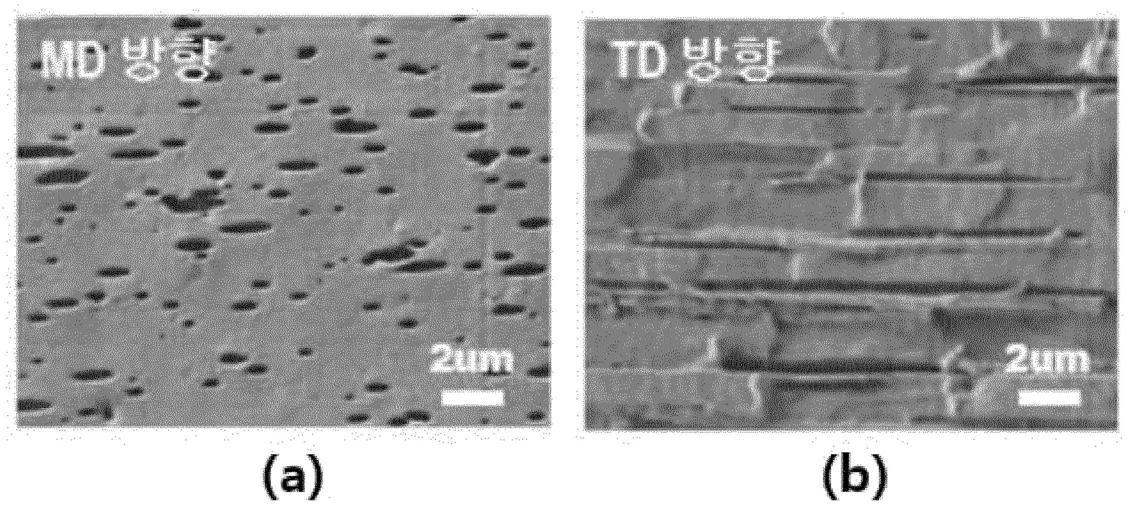


MD 방향: MD direction

TD 방향: TD direction

【FIG. 2】

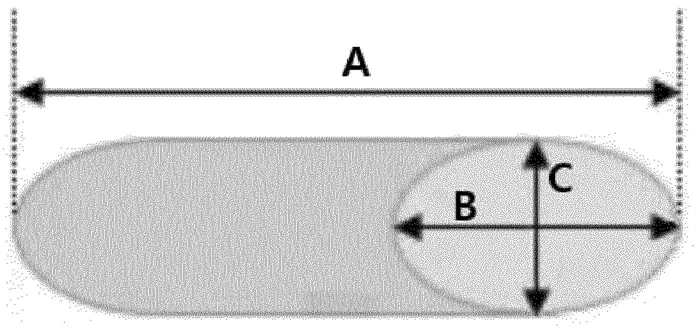

【FIG. 3】

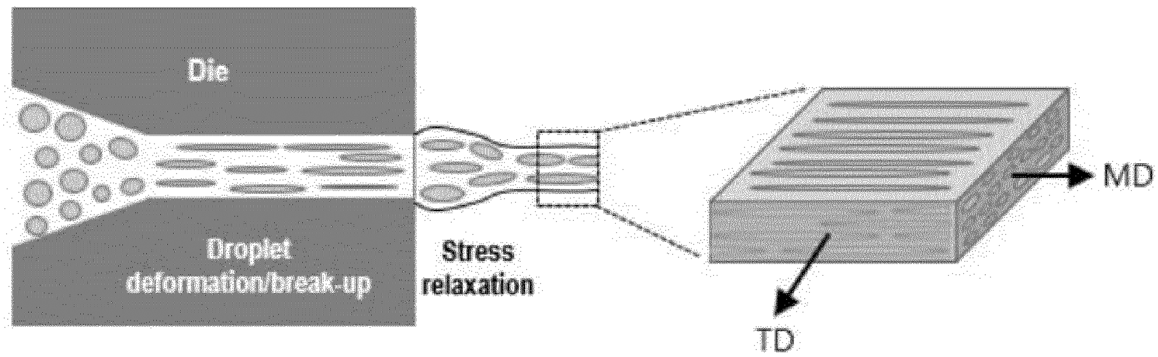

**INTERNATIONAL SEARCH REPORT**

International application No.
**PCT/KR2024/009466**

**A. CLASSIFICATION OF SUBJECT MATTER**

**C08L 67/04**(2006.01)i; **C08L 33/06**(2006.01)i; **C08L 63/00**(2006.01)i; **C08J 5/18**(2006.01)i

According to International Patent Classification (IPC) or to both national classification and IPC

**B. FIELDS SEARCHED**

Minimum documentation searched (classification system followed by classification symbols)

C08L 67/04(2006.01); B01D 35/30(2006.01); B29B 11/14(2006.01); B29B 7/00(2006.01); C08G 63/02(2006.01); C08J 9/00(2006.01); C08L 67/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리락트산(polylactic acid), 폴리(3-하이드록시프로피오네이트)(poly(3-hydroxypropionate)), 상용화제(compatibilizer)

**C. DOCUMENTS CONSIDERED TO BE RELEVANT**

| Category* | Citation of document, with indication, where appropriate, of the relevant passages | Relevant to claim No. |
|---|---|---|
| X | KR 10-2023-0059925 A (HDC HYUNDAI ENGINEERING PLASTICS CO., LTD.) 04 May 2023 (2023-05-04)<br>See claims 1-15; paragraphs [0019]-[0091]; and tables 1 and 3. | 1-11 |
| A | KR 10-2023-0032981 A (CJ CHEILJEDANG CORPORATION) 07 March 2023 (2023-03-07)<br>See claims 1-10; and paragraphs [0092]-[0145]. | 1-11 |
| A | KR 10-2019-0076480 A (KOREA CONFORMITY LABORATORIES) 02 July 2019 (2019-07-02)<br>See claims 1-12. | 1-11 |
| A | KR 10-2023-0027645 A (LG CHEM, LTD.) 28 February 2023 (2023-02-28)<br>See claims 1-9. | 1-11 |
| A | KR 10-2021-0032296 A (LG CHEM, LTD.) 24 March 2021 (2021-03-24)<br>See claims 1-14. | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 October 2024** | **07 October 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2024/009466**

| Patent document cited in search report | Publication date (day/month/year) | Patent family member(s) | Publication date (day/month/year) |
|---|---|---|---|
| KR 10-2023-0059925 A | 04 May 2023 | KR 10-2587591 B1 | 11 October 2023 |
| KR 10-2023-0032981 A | 07 March 2023 | CA 3230359 A1 | 09 March 2023 |
| | | CN 118215711 A | 18 June 2024 |
| | | EP 4397712 A1 | 10 July 2024 |
| | | WO 2023-033547 A1 | 09 March 2023 |
| KR 10-2019-0076480 A | 02 July 2019 | KR 10-2029145 B1 | 07 October 2019 |
| KR 10-2023-0027645 A | 28 February 2023 | None | |
| KR 10-2021-0032296 A | 24 March 2021 | CN 114269852 A | 01 April 2022 |
| | | EP 4032954 A1 | 27 July 2022 |
| | | EP 4032954 A4 | 22 February 2023 |
| | | EP 4032954 B1 | 07 February 2024 |
| | | JP 2022-542508 A | 04 October 2022 |
| | | US 2022-0282030 A1 | 08 September 2022 |
| | | WO 2021-054721 A1 | 25 March 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230098841
- KR 1020240087702